# EUROPÄISCHE PATENTSCHRIFT

(11) **EP 2 208 278 B1**
(45) Veröffentlichungstag und Bekanntmachung des Hinweises auf die Patenterteilung: **21.11.2018**
(21) Anmeldenummer: 08804089.4
(22) Anmeldetag: 12.09.2008
(51) Int. Cl.: H02J 7/00, H02J 7/04

(54) **LADEGERÄT ZUR LADUNG MINDESTENS EINES WIEDERAUFLADBAREN ENERGIESPEICHERS**
CHARGING DEVICE FOR CHARGING AT LEAST ONE RECHARGEABLE ENERGY STORAGE UNIT
CHARGEUR POUR CHARGER AU MOINS UN ACCUMULATEUR D'ÉNERGIE RECHARGEABLE

(30) Priorität: 02.11.2007 DE 102007052293
(43) Veröffentlichungstag der Anmeldung: 21.07.2010
(73) Patentinhaber: Robert Bosch GmbH, 70442 Stuttgart (DE)
(72) Erfinder: OSSWALD, Alexander, 70599 Stuttgart (DE)
(86) Internationale Anmeldenummer: PCT/EP2008/062124
(87) Internationale Veröffentlichungsnummer: WO 2009/056383

(56) Entgegenhaltungen:
- EP-A- 0 723 326
- EP-A- 0 795 946
- DE-A1- 4 431 620
- US-A- 5 656 920
- US-A- 5 903 136
- US-A1- 2002 161 537

## Beschreibung

Die Erfindung betrifft ein Ladegerät zur Ladung mindestens eines wiederaufladbaren Energiespeichers nach der Gattung des unabhängigen Anspruchs.

### Stand der Technik

Bei Ladegeräten, die zur Ladung wiederaufladbarer Energiespeicher, wie zum Beispiel Litium-Ionen-, Nickel-Cadmium-, Nickel-Hydrid-, oder Blei-Akkumulatoren, eine feste Ladeschlussspannung verwenden, resultiert aus dem Innenwiderstand des Ladegerätes ein vom Ladestrom abhängiger Spannungsabfall. Dieser führt zu einer Verlängerung der Ladezeit und beeinflusst folglich den Füllgrad des wiederaufladbaren Energiespeichers.

Es ist bekannt, mittels einer herkömmlichen Vierpunktmessung den Ladevorgang zu überwachen und zu verkürzen. Jedoch ist hierbei der wiederaufladbare Energiespeicher permanent mit dem Ladegerät verbunden, so dass über die Messanschlüsse ein geringer Strom fließt, der zu einer Entladung führt. Eine Möglichkeit zur Umgehung dieses Problems ergibt sich durch den Einsatz einer Umschaltvorrichtung, die in der Lage ist, die Messverbindungen vom wiederaufladbaren Energiespeicher zu trennen. Eine derartige Umschaltvorrichtung ist jedoch in der Regel teuer und platzaufwändig.

Aus der DE 44 31 620 A1 ist ein Ladegerät für wiederaufladbare Energiespeicher mit einer maximalen Ladespannung von 4,2 V bekannt. Das Ladegerät umfasst eine Kompensationsschaltung, die zumindest den Spannungsabfall kompensiert, der durch den Innenwiderstand des Ladegrätes mit Ausnahme des wiederaufladbaren Energiespeichers verursacht wird. Dazu ist ein Kompensationswiderstand als Shunt in die Masseleitung des Ladegeräts integriert, dessen Wert dem Innenwiderstand des Ladegeräts entspricht. Eine Spannungserfassungsschaltung misst die Ladespannung an den Kontakten der Beschaltung einschließlich des wiederaufladbaren Energiespeichers, wobei eine Ladesteuerschaltung den Ladevorgang auf der Basis der gemessenen Ladespannung derart steuert, dass die Ladespannung des wiederaufladbaren Energiespeichers eine vorgeschriebene Spannung nicht überschreitet. Die Höhe des Ladestroms wird dabei über einen weiteren Shunt in der Versorgungsleitung des wiederaufladbaren Energiespeichers festgelegt.

Weiterhin ist in der EP 0 795 946 A2 ein Ladegerät zum beschleunigten Laden von Litium-Ionen-Zellen gezeigt, das den aus den Batterieanschlüssen, den Sicherungen, den Kontakten sowie der Verkabelung resultierenden Reiheninnenwiderstand (Electrical Series Resistance - ESR) während des Ladevorgangs mittels einer entsprechenden Kompensationsschaltung derart kompensiert, dass diese den durch den ESR erzeugten Spannungsabfall von der an den Anschlüssen des wiederaufladbaren Energiespeichers anliegenden Ladespannung abzieht. Dazu ist ein Shunt mit einem dem ESR entsprechenden Wert zwischen dem positiven Anschluss des wiederaufladbaren Energiespeichers und dem positiven Versorgungsanschluss einer Stromquelle des Ladegeräts angeordnet, wobei eine Messung der Ladespannung über zusätzliche SenseLeitungen erfolgt. Auch das in der EP 0 795 946 A2 gezeigte Ladegerät ist auf eine maximale Ladespannung von 4,1 V bis 4,2 V ausgelegt.

### Offenbarung der Erfindung

Das erfindungsgemäße Ladegerät zur Ladung mindestens eines wiederaufladbaren Energiespeichers, mit einem definierten Innenwiderstand und mit einer Kompensationsschaltung zur Kompensation eines durch den Innenwiderstand hervorgerufenen Spannungsabfalls während des Ladevorgangs bietet gegenüber dem Stand der Technik den Vorteil, dass die Kompensation nur dann erfolgt, wenn auch tatsächlich ein Ladestrom fließt. Dazu weist die Kompensationsschaltung eine Stromerfassung zur Erfassung des Ladestroms des wiederaufladbaren Energiespeichers und einen Spannungsregler zur Anpassung der Ladespannung an den erfassten Ladestrom auf. In vorteilhafter Weise ergibt sich so eine einfache Zweipunktmessung, mit der die genannten Nachteile einer Vierpunktmessung vermieden werden können, so dass eine deutliche Verkürzung der Ladezeit erzielbar ist. Dadurch, dass die Kompensationsschaltung einen zwischen der Stromerfassung und dem Spannungsregler angeordneten Spannungteiler enthält, über dessen Dimensionierung die Kompensation des Innenwiderstands erfolgt, ergibt sich keine Abhängigkeit mehr von einem in der Versorgungs- und/oder Masseleitung integrierten und zur Stromerfassung benötigten Shunts. Des weiteren kann vollständig auf etwaige Senseleitungen zur Messung verzichtet werden. Zudem ist das erfindungsgemäße Ladegerät weder an eine bestimmte, maximale Ladespannung noch an eine maximale Stromgrenze für die Kompensation oder eine bestimmte Technologie der wiederaufladbaren Energiespeicher gebunden.

Weitere Vorteile der Erfindung ergeben sich durch die in den abhängigen Ansprüchen angegebenen Merkmale sowie aus der Zeichnung und der nachfolgenden Beschreibung.

Erfindungsgemäß ist der Spannungsteiler einerseits mit einer Referenzspannung und andererseits mit einem Ausgang der Stromregelung verbunden ist, wobei ein Mittenabgriff des Spannungsteilers mit zumindest einem Eingang des Spannungsreglers verbunden ist. Auf diese Weise beeinflusst die Stromerfassung den Spannungsregler über den Spannungsteiler derart, dass in Abhängigkeit vom erfassten Ladestrom die Referenzspannung für den Spannungsregler verändert wird. Die Erhöhung der Ladespannung entspricht dabei dem durch den Innenwiderstand verursachten Spannungabfall. In diesem Zusammenhang ergibt sich eine besonders einfache Erzeugung der Referenzspannung durch eine an einer Hilfsspannung liegenden Z-Diode.

In einer alternativen Ausgestaltung ist ein Temperaturfühler vorgesehen zur Beeinflussung der Referenzspannung. Somit ist es möglich, eine temperaturbedingte Erhöhung des Innenwiderstands durch eine entsprechende Erhöhung der Referenzspannung auszugleichen.

Eine sehr kostengünstige und einfache Realisierung ergibt sich in vorteilhafter Weise, wenn der Spannungregler als ein Operationsverstärker ausgebildet ist, dessen invertierender Eingang mit dem Mittenabgriff des Spannungsteilers und dessen nicht-invertierender Eingang mit einem Mittenkontakt eines weiteren Spannungsteilers verbunden ist, wobei der weitere Spannungsteiler zwischen einem Pluspol des wiederaufladbaren Energiespeichers und einer elektrischen Masse liegt und ein Ist-Signal der Spannung des wiederaufladbaren Energiespeichers liefert.

Die Stromerfassung erfolgt mittels eines mit dem wiederaufladbaren Energiespeicher verbindbaren Shunts. Dieser ist in vorteilhafter Weise einerseits mit einem Knotenpunkt, an dem sowohl eine elektrische Masse als auch ein Massekontakt des wiederaufladbaren Energiespeichers liegt, und andererseits mit der Stromerfassung verbunden. Dieser Shunt kann auch für die Kompensation verwendet werden, so dass diese Aufgabe nicht durch einen zusätzlichen Widerstand im Ladestromkreis übernommen werden muss.

Der definierte Innenwiderstand umfasst zumindest den jeweiligen Widerstand der relevanten Leiterbahnen einer Leiterplatte, einer evtl. vorhandenen Verdrahtung, der Kontakte zur Kontaktierung des wiederaufladbaren Energiespeichers mit dem Ladegerät und/oder einer Trennvorrichtung zur Trennung des wiederaufladbaren Energiespeichers von dem Ladegerät. Ist zudem der ohmsche Widerstand der im wiederaufladbaren Energiespeicher verwendeten Einzelzellen sowie der entsprechenden Kontakte und der Verkabelung bekannt, so kann der definierte Innenwiderstand auch diesen zur Kompensation umfassen.

### Zeichnung

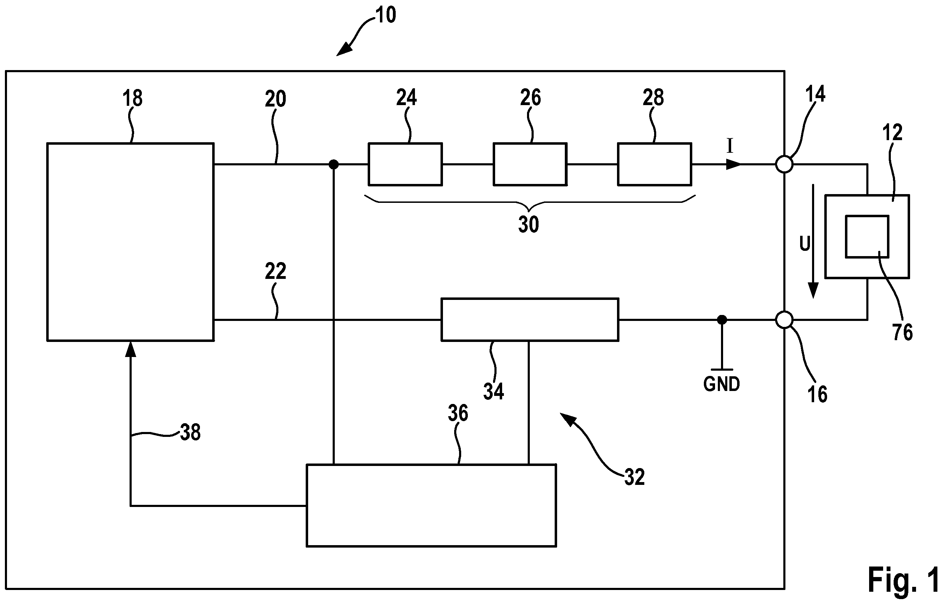

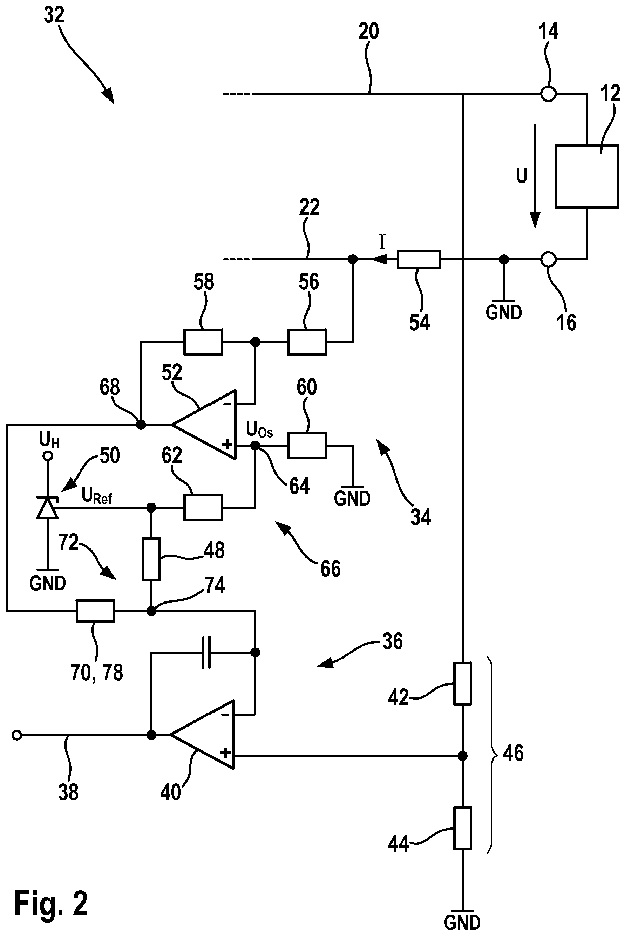

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere wird ein Fachmann auch die Merkmale aus unterschiedlichen Ausführungsbeispielen zu weiteren sinnvollen Kombinationen zusammenfassen.

Es zeigen
Fig. 1: ein erstes Blockschaltbild des erfindungsgemäßen Ladegeräts und
Fig. 2: ein zweites, detailliertes Blockschaltbild der erfindungsgemäßen Kompensationsschaltung des Ladegeräts.

In Figur 1 ist ein erstes Blockschaltbild eines erfindungsgemäßen Ladegeräts 10 zur Ladung eines wiederaufladbaren Energiespeichers 12 gezeigt, der über einen ersten und einen zweiten Kontakt 14 bzw. 16 mit dem Ladegerät 10 verbunden ist. Diese Verbindung kann beispeilsweise durch einen nicht näher gezeigten Steckkontakt realisiert sein, der dem Fachmann bekannt ist.

Das Ladegerät 10 verfügt über eine Ladeschaltung 18, die unter anderem eine nicht gezeigte mit einem Stromnetz verbindbare Energiequelle sowie die für den Ladevorgang des wiederaufladbaren Energiespeichers 12 erforderliche Elektronik beinhaltet. Da der Aufbau der Ladeschaltung 18 für unterschiedliche Typen von Energiespeichern sowie unterschiedliche Anforderungen an den Ladevorgang variieren kann und zudem für die Erfindung von untergeordneter Bedeutung ist, soll auf eine detaillierte Beschreibung verzichtet werden.

Die beiden Kontakte 14 und 16 sind über eine Versorgungsleitung 20 bzw. eine auf einer elektrischen Masse GND liegenden Masseleitung 22 mit der Ladeschaltung 18 verbunden. Mit 24, 26 und 28 sind jeweils die Widerstände der für den Ladevorgang relevanten Leiterbahnen einer nicht gezeigten Leiterplatte, einer Trennvorrichtung zur Trennung des wiederaufladbaren Energiespeichers 12 von dem Ladegerät 10 sowie einer evtl. vorhandenen Verdrahtung der Kontakte 14, 16 mit der Leiterplatte gekennzeichnet. Dabei kann als Trennvorrichtung in bekannter Weise beispielsweise ein Relais, ein Halbleiter oder dergleichen zum Einsatz kommen. Die Widerstände 24, 26 und 28 bilden zusammen einen Innenwiderstand 30, der zu einem vom Ladestrom I abhängigen Spannungsabfall führt. Dieser Spannungsabfall beeinflusst zum Einen den Füllgrad des wiederaufladbaren Energiespeichers 12, d.h. dessen maximale Ladespannung, und verlängert zum Anderen den Ladevorgang.

Um den Ladevorgang zu verkürzen, ist erfindungsgemäß eine Kompensationsschaltung 32 in dem Ladegerät 10 vorgesehen, die eine Stromerfassung 34 zur Erfassung des Ladestroms I des wiederaufladbaren Energiespeichers 12 sowie einen Spannungsregler 36 zur Anpassung der Ladespannung U an den erfassten Ladestrom I umfasst. Dabei ist der Spannungsregler 36 zum Einen mit der Versorgungsleitung 20 und zum Anderen mit der Stromerfassung 34 verbunden, wobei die Stromerfassung 34 zumindest teilweise in der Masseleitung 22 integriert ist. Über eine Verbindungsleitung 38 nimmt der Spannungsregler 36 derart Einfluss auf die Ladeschaltung 18, dass die Ladespannung U in Abhängigkeit vom Ladestrom I um den durch den Innenwiderstand 30 erzeugten Spannungsabfall erhöht wird, wodurch sich die Ladezeit entsprechend verkürzt.

Figur 2 zeigt ein detailliertes Blockschaltbild der erfindungsgemäßen Kompensationsschaltung 32, die entsprechend Figur 1 aus der Stromerfassung 34 und dem Spannungsregler 36 besteht. Der Spannungsregler 36 umfasst einen als Stromregler ausgeführten Operationsverstärker 40, an dessen nicht-invertierenden Eingang ein Ist-Signal in Gestalt der durch einen aus den Widerständen 42 und 44 bestehenden Spannungsteiler 46 im entsprechenden Widerstandsverhältnis herabgesetzten Ladespannung U anliegt. Diese wird an der Versorgungsleitung 20 abgegriffen, über die der wiederaufladbare Energiespeicher 12 mittels des Kontakts 14 geladen wird. Die Ladespannung U ergibt sich dabei aus der Potentialdifferenz zwischen dem ersten Kontakt 14 und dem mit der über die Masseleitung 22 und der elektrischen Masse GND verbundenen zweiten Kontakt 16. Dem invertierenden Eingang des Operationsverstärkers 40 ist über ein Widerstand 48 eine Referenzspannung U_{Ref} zugeführt, die durch eine an einer Hilfsspannung U_{H} liegenden Z-Diode 50 erzeugt wird. Statt der Z-Diode 50 können selbstverständlich auch andere entsprechende Bauelemente zur Referenzspannungserzeugung, beispielsweise Operationsverstärker oder dergleichen, verwendet werden.

Die Stromerfassung 34 umfasst einen weiteren, als invertierenden Verstärker beschalteten Operationsverstärker 52, an dessen invertierendem Eingang der gegenüber der elektrischen Masse GND negative Spannungsabfall eines in der Masseleitung 22 angeordneten Shunts 54 anliegt. Dieser negative Spannungsabfall wird um den durch Widerstände 56 und 58 eingestellten Verstärkungsfaktor verstärkt und zu einer am nicht-invertierenden Eingang des weiteren Operationsverstärkers 52 anliegenden Offsetspannung U_{Os} addiert. Dabei ergibt sich die Offsetspannung U_{Os} an einem Mittenabgriff eines aus Widerständen 60 und 62 gebildten Spannungsteilers 64, der einerseits mit der Referenzspannung U_{Ref} und andererseits mit der elektrischen Masse GND verbunden ist. Die Widerstände 60 und 62 des Spannungsteilers 64 sind so dimensioniert, dass sich im stromlosen Fall am Ausgang 68 des weiteren Operationsverstärkers 52 eine Spannung in Höhe der Referenzspannung U_{Ref} ergibt.

Das Ausgangssignal des weiteren Operationsverstärkers 52 wird nun über einen Widerstand 70 auf den Spannungsregler 36 gegeben, wobei die Widerstände 48 und 70 einen Spannungsteiler 72 bilden, dessen Mittenabgriff 74 mit dem invertierenden Eingang des Operationsverstärkers 40 verbunden ist. Sobald ein Ladestrom I über den Shunt 54 fließt, ist die Spannung am Ausgang des weiteren Operationsverstärkers 52 höher als die Referenzspannung U_{Ref}. Entsprechend dem Teilerverhältnis der beiden Widerstände 48 und 70 des Spannungsteilers 72 ist die Spannung am invertierenden Eingang des Operationsverstärkers 40 höher als die Referenzspannung U_{Ref}. Fließt dagegen kein Ladestrom I, entspricht die Spannung am invertierenden Eingang des Operationsverstärkers 40 der Referenzspannung U_{Ref}. Die Stärke des Einflusses der Stromerfassung 34 auf den Spannungsregler 36 wird mit dem Widerstand 70 festgelegt und hängt von der Größe des zu kompensierenden Innenwiderstands 30 ab. Zudem beeinflusst die Stromerfassung 34 den Spannungsregler 36 über den Spannungsteiler 72 derart, dass in Abhängigkeit vom erfassten Ladestrom I die Referenzspannung U_{Ref} für den Spannungsregler 36 und demzufolge auch die Ladespannung U verändert wird. Dazu ist der Ausgang des Operationsverstärkers 40 unter Bezugnahme auf Figur 1 über die Verbindungsleitung 38 mit der Ladeschaltung 18 verbunden.

In einer alternativen Ausgestaltung wird neben dem aus den Widerständen 24, 26 und 28 gebildeten Innenwiderstand 30 des Ladegeräts 10 auch der ohmsche Widerstand 76 des wiederaufladbaren Energiespeichers 12 berücksichtigt. Dabei ergibt sich der ohmsche Widerstand 76 aus den Widerständen der im wiederaufladbaren Energiespeicher 12 verwendeten Einzelzellen sowie der entsprechenden Kontakte und der notwendigen Verbindungen. Zur Kompensation ist es notwendig, dass der ohmschen Widerstand 76 bekannt ist, so dass der Spannungsteiler 72 an den resultierenden, gesamten Innenwiderstand 30 angepasst werden kann.

In einer weiteren alternativen Ausgestaltung ist vorgesehen, dass die Referenzspannung U_{Ref} mittels eines Temperaturfühlers beeinflussbar ist. Dabei kann der Widerstand 70 beispielsweise durch einen NTC 78 ersetzt werden. Alternativ können auch andere Bauelemente mit einem entsprechenden negativen Temperaturkoeffizienten zum Einsatz kommen. Die Verwendung des NTC 78 ist deswegen vorteilhaft, weil sich auch der Innenwiderstand 30 des Ladegeräts 10 in Abhängigkeit von der Temperatur verändert. Somit ist es beispielsweise möglich, eine temperaturbedingte Erhöhung des Innenwiderstands 30 durch eine entsprechende Erhöhung der Referenzspannung U_{Ref} auszugleichen.

Es sei abschließend noch darauf hingewiesen, dass die gezeigten Ausführungsbeispiele weder auf die Figuren 1 und 2 noch auf die beschriebenen, elektrischen Bauelemente beschränkt sind. So ist es beispielsweise denkbar, die gezeigte Schaltung entweder vollständig oder teilweise als einen integrierten Schaltkreis zu realisieren. Weiterhin ist eine Angabe exakter Werte für die Widerstände nicht notwendig, da diese unter anderem von den verwendeten Typen der wiederaufladbaren Energiespeicher sowie den Randwerten des Ladegeräts 10 (maximale Ladespannung U, maximaler Ladestrom I) abhängen. Ein Fachmann wird in der Lage sein, diese Werte entsprechend dem Einsatzgebiet auszuwählen.

Das erfindungsgemäße Ladegerät 10 sowie dessen Kompensationsschaltung 32 bieten zudem den Vorteil, dass sowohl ein Einsatz für beliebige Ladespannungen und Ladeströme (die Kompensation arbeitet zum Beispiel bei Ladeströmen zwischen 0,1 A und 100 A) als auch für unterschiedlichste Typen von wiederaufladbaren Energiespeichern wie Litium-Ionen, Nickel-Hydrid, Nickel-Cadmium, Blei, etc. in Frage kommt. Denkbar wäre beispeilsweise die Verwendung für wiederaufladbare Energiespeicher von Elektrowerkzeugen, wobei die Erfindung hierauf nicht beschränkt ist.

## Patentansprüche

1. Ladegerät (10) zur Ladung mindestens eines wiederaufladbaren Energiespeichers (12), wobei das Ladegerät (10) einen definierten Innenwiderstand (30) und eine Kompensationsschaltung (32) zur Kompensation eines durch den Innenwiderstand (30) hervorgerufenen Spannungsabfalls während des Ladevorgangs aufweist, wobei die Kompensationsschaltung (32) eine Stromerfassung (34) zur Erfassung eines Ladestroms (I) des wiederaufladbaren Energiespeichers (12) und einen Spannungsregler (36) zur Anpassung der Ladespannung (U) an den erfassten Ladestrom (I) aufweist, und wobei die Kompensationsschaltung (32) einen zwischen der Stromerfassung (34) und dem Spannungsregler (36) angeordneten Spannungteiler (72) enthält, über dessen Dimensionierung die Kompensation des Innenwiderstands (30) erfolgt, **dadurch gekennzeichnet,**
• **dass** der Spannungregler (36) einen Operationsverstärker (40) aufweist, dessen invertierender Eingang mit dem Mittenabgriff (74) des Spannungsteilers (72) und dessen nicht-invertierender Eingang mit einem Mittenkontakt (43) eines weiteren Spannungsteilers (46) verbunden ist, wobei der weitere Spannungsteiler (46) zwischen einer Versorgungsleitung (20) des wiederaufladbaren Energiespeichers (12) und einer elektrischen Masse (GND) liegt und ein Ist-Signal der Ladespannung (U) des wiederaufladbaren Energiespeichers (12) liefert,
• **dass** der Spannungsteiler (72) einerseits mit einer Referenzspannung (U_{Ref}) und andererseits mit dem Ausgang (68) eines weiteren Operationsverstärkers (52) der Stromerfassung (34) verbunden ist, wobei die Stromerfassung (34) den Spannungsregler (36) über den Spannungsteiler (72) derart beeinflusst, dass in Abhängigkeit vom erfassten Ladestrom (I) die Referenzspannung (U_{Ref}) für den Spannungsregler (36) verändert wird, und
• **dass** das Teilerverhältnis des Spannungsteilers (72) derart gewählt ist, dass die Spannung am invertierenden Eingang des weiteren Operationsverstärkers (52) bei fließendem Ladestrom (I) höher als die Referenzspannung (U_{Ref}) ist und ohne Ladestrom (I) der Referenzspannung (U_{Ref}) entspricht.

2. Ladegerät (10) nach einem Anspruch 1, **dadurch gekennzeichnet, dass** die Referenzspannung (U_{Ref}) durch eine an einer Hilfsspannung (U_{H}) liegenden Z-Diode (50) erzeugt ist.

3. Ladegerät (10) nach einem der vorhergehenden Ansprüche, **dadurch gekennzeichnet, dass** ein Temperaturfühler, insbesondere ein NTC (78), vorgesehen ist zur Beeinflussung der Referenzspannung (U_{Ref}).

4. Ladegerät (10) nach Anspruch 1, **dadurch gekennzeichnet, dass** die Stromerfassung (34) mittels eines mit dem wiederaufladbaren Energiespeicher (12) verbindbaren Shunts (54) erfolgt.

5. Ladegerät (10) nach Anspruch 4, **dadurch gekennzeichnet, dass** der Shunt (54) einerseits mit einem Knotenpunkt, an dem sowohl eine elektrische Masse (GND) als auch ein Massekontakt (16) des wiederaufladbaren Energiespeichers (12) liegt, und andererseits mit der Stromerfassung (34) verbunden ist.

6. Ladegerät (10) nach Anspruch 1, **dadurch gekennzeichnet, dass** der definierte Innenwiderstand (30) zumindest den jeweiligen Widerstand der relevanten Leiterbahnen einer Leiterplatte (24), einer evtl. vorhandenen Verdrahtung (28, der Kontakte (14, 16) zur Kontaktierung des wiederaufladbaren Energiespeichers (12) mit dem Ladegerät (10) und/oder einer Trennvorrichtung (26) zur Trennung des wiederaufladbaren Energiespeichers (12) von dem Ladegerät (10) umfasst.

7. Ladegerät (10) nach Anspruch 6, **dadurch gekennzeichnet, dass** der definierte Innenwiderstand (30) den ohmsche Widerstand (76) des wiederaufladbaren Energiespeichers (12) umfasst.

## Claims

1. Charging device (10) for charging at least one rechargeable energy store (12), wherein the charging device (10) has a defined internal resistance (30) and a compensation circuit (32) for compensation of a voltage drop caused by the internal resistance (30) during the charging process, wherein the compensation circuit (32) has a current detection system (34) for detecting a charging current (I) of the rechargeable energy store (12) and a voltage regulator (36) for adjusting the charging voltage (U) to the detected charging current (I), and wherein the compensation circuit (32) contains a voltage divider (72) arranged between the current detection system (34) and the voltage regulator (36), by means of which voltage divider the compensation of the internal resistance (30) is dimensioned, **characterized**
• **in that** the voltage regulator (36) has an operational amplifier (40), the inverting input of which is connected to the centre tap (74) of the voltage divider (72) and the non-inverting input of which is connected to a centre contact (43) of a further voltage divider (46), wherein the further voltage divider (46) is located between a supply line (20) of the rechargeable energy store (12) and an electrical earth (GND) and supplies an actual signal of the charging voltage (U) of the rechargeable energy store (12),
• **in that** the voltage divider (72) is connected on the one side to a reference voltage (U_{Ref}) and on the other side to the output (68) of a further operational amplifier (52) of the current detection system (34), wherein the current detection system (34) influences the voltage regulator (36) by means of the voltage divider (72) in such a way that the reference voltage (U_{Ref}) for the voltage regulator (36) is changed depending on the detected charging current (I), and
• **in that** the divider ratio of the voltage divider (72) is selected in such a way that the voltage at the inverting input of the further operational amplifier (52) is higher than the reference voltage (U_{Ref}) when the charging current (I) is flowing and corresponds to the reference voltage (U_{Ref}) without a charging current (I).

2. Charging device (10) according to Claim 1, **characterized in that** the reference voltage (U_{Ref}) is generated by a Zener diode (50) at an auxiliary voltage (U_{H}).

3. Charging device (10) according to either of the preceding claims, **characterized in that** a temperature sensor, in particular an NTC (78), is provided to influence the reference voltage (U_{Ref}).

4. Charging device (10) according to Claim 1, **characterized in that** the current detection (34) is effected by means of a shunt (54), which can be connected to the rechargeable energy store (12).

5. Charging device (10) according to Claim 4, **characterized in that** the shunt (54) is connected on the one side to a node at which both an electrical earth (GND) and an earth contact (16) of the rechargeable energy store (12) are located and on the other side to the current detection system (34).

6. Charging device (10) according to Claim 1, **characterized in that** the defined internal resistance (30) comprises at least the respective resistance of the relevant conductor tracks of a printed circuit board (24), possibly present wiring (28) of the contacts (14, 16) for contact-connecting the rechargeable energy store (12) to the charging device (10) and/or an isolating apparatus (26) for isolating the rechargeable energy store (12) from the charging device (10).

7. Charging device (10) according to Claim 6, **characterized in that** the defined internal resistance (30) comprises the ohmic resistance (76) of the rechargeable energy store (12).

## Revendications

1. Chargeur (10), destiné à charger au moins un accumulateur d'énergie (12) rechargeable, le chargeur (10) présentant une résistance intérieure (30) définie et un circuit de compensation (32), destiné à compenser une chute de tension provoquée par la résistance intérieure (30), pendant le processus de charge, le circuit de compensation (32) comportant une détection de courant (34) destinée à détecter un courant de charge (I) de l'accumulateur d'énergie (12) rechargeable et un régulateur de tension (36) destiné à adapter la tension de charge (U) au courant de charge (I) détecté, et le circuit de compensation (32) contenant un diviseur de tension (72) placé entre la détection de courant (34) et le régulateur de tension (36) via le dimensionnement duquel s'effectue la compensation de la résistance intérieure (30), **caractérisé**
• **en ce que** le régulateur de tension (36) comporte un amplificateur d'opération (40) dont l'entrée inversée est connectée avec la prise centrale (74) du diviseur de tension (72) et dont l'entrée non inversée est connectée avec un contact central (43) d'un diviseur de tension (46) supplémentaire, le diviseur de tension (46) supplémentaire se situant entre une ligne d'alimentation (20) de l'accumulateur d'énergie (12) rechargeable et une masse (GND) et fournissant un signal réel de la tension de charge (U) de l'accumulateur d'énergie (12) rechargeable,
• **en ce que** le diviseur de tension (72) est connecté d'une part sur une tension de référence (U_{Ref}) et d'autre part sur la sortie (68) d'un amplificateur d'opérations (52) supplémentaire de la détection de courant (34), la détection de courant (34) influençant le régulateur de tension (36) via le diviseur de tension (72) de telle sorte, qu'en fonction du courant de charge (I) détecté, la tension de référence (U_{Ref}) pour le régulateur de tension (36) soit modifiée et
• **en ce qu'**on sélectionne le rapport de division du diviseur de tension (72) de telle sorte que sur l'entrée inversée de l'amplificateur d'opérations (52), lorsque le courant de charge (I) circule, la tension soit supérieure à la tension de référence (U_{Ref}) et en l'absence de courant de charge (I), corresponde à la tension de référence (U_{Ref}).

2. Chargeur (10) selon la revendication 1, **caractérisé en ce que** la tension de référence (U_{Ref}) est générée par une diode Zener (50) appliquée sur une tension auxiliaire (U_{H}).

3. Chargeur (10) selon l'une quelconque des revendications précédentes, **caractérisé en ce qu'**il est prévu une sonde thermique, notamment un NTC (78), destinée à influencer la tension de référence (U_{Ref}).

4. Chargeur (10) selon la revendication 1, **caractérisé en ce que** la détection de courant (34) s'effectue au moyen d'un shunt (54), susceptible d'être connecté sur l'accumulateur d'énergie (12) rechargeable.

5. Chargeur (10) selon la revendication 4, **caractérisé en ce que** le shunt (54) est connecté d'une part sur un noeud, sur lequel sont appliqués aussi bien une masse électrique (GND) qu'un contact de masse (16) de l'accumulateur d'énergie (12) rechargeable, et d'autre part sur la détection de courant (34).

6. Chargeur (10) selon la revendication 1, **caractérisé en ce que** la résistance intérieure (30) définie comprend au moins la résistance respective des pistes conductrices déterminantes d'une carte de circuit imprimé (24), d'un câblage (28) éventuel des contacts (14, 16) pour la mise en contact de l'accumulateur d'énergie (12) rechargeable avec le chargeur (10) et/ou d'un dispositif séparateur (26), destiné à séparer l'accumulateur d'énergie (12) rechargeable du chargeur (10).

7. Chargeur (10) selon la revendication 6, **caractérisé en ce que** la résistance intérieure (30) définie comprend la résistance ohmique (76) de l'accumulateur d'énergie (12) rechargeable.
